**Europäisches Patentamt**

**European Patent Office**

**Office européen des brevets**

(19)

(11) Numéro de publication: **0 196 983**
**B1**

(12) **FASCICULE DE BREVET EUROPEEN**

(45) Date de publication du fascicule du brevet:
06.12.89

(51) Int. Cl.⁴: **A21C 15/00**

(21) Numéro de dépôt: **86420060.5**

(22) Date de dépôt: **24.02.86**

(54) **Dispositif pour la fabrication de sandwichs.**

(30) Priorité: **25.02.85 FR 8503243**
**08.01.86 FR 8600455**

(43) Date de publication de la demande:
**08.10.86 Bulletin 86/41**

(45) Mention de la délivrance du brevet:
**06.12.89 Bulletin 89/49**

(84) Etats contractants désignés:
**AT BE CH DE GB IT LI LU NL SE**

(56) Documents cités:
**DE-C- 115 901**
**FR-A- 818 996**
**US-A- 1 871 837**
**US-A- 1 940 564**
**US-A- 2 784 682**

(73) Titulaire: **GOODINN, 15, rue de la Reynie,**
**F-75004 Paris(FR)**

(72) Inventeur: **Ochs, Jean, 21, avenue Pauline,**
**F-94500 Champigny sur Marne(FR)**

(74) Mandataire: **Timoney, Ian Charles Craig, SOCIETE**
**NATIONALE ELF AQUITAINE Departement Propriété**
**Industrielle Tour Elf Cedex 45, F-92078 Paris La**
**Défense(FR)**

ACTORUM AG

## Description

La présente invention a pour objet un dispositif pour la fabrication de sandwichs.

Dans le cadre d'une restauration rapide, il est fréquent de consommer des sandwichs. Les sandwichs comprennent le plus souvent deux tranches de pain entre lesquelles est disposée une tranche de viande ou de charcuterie. D'autres sandwichs sont constitués par une saucisse préalablement chauffée engagée dans une cavité ménagée dans un tronçon de pain lui-même préalablement chauffé.

Compte tenu de leur manque de variété, les sandwichs sont très peu attractifs pour les consommateurs.

Le document US-A 1 940 564 décrit un dispositif pour la préparation de sandwichs, plus particulièrement ceux appelés "hot dog". Lors de cette préparation, un pain est préalablement percé à l'aide d'un élément pointu et ensuite ce pain est transféré sur l'extérieur d'un tube contenant une garniture alimentaire. Le tube est retiré du pain pendant qu'un piston fixe maintient la garniture à l'intérieur du pain. L'utilisation d'un tel dispositif présente l'inconvénient de nécessiter plusieurs manipulations pour la préparation d'un sandwich.

Le document US-A 2 784 682 décrit aussi, sur la figure 4, un dispositif pour la préparation de sandwichs. Ce dispositif est de construction complexe et n'est pas adapté pour réaliser des sandwichs contenant une grande variété de garnitures.

La présente invention vise à remédier à ces inconvénients en fournissant un dispositif permettant la réalisation de sandwichs de façon simple et qui peuvent être fourrés de garnitures très variées chaudes ou froides, telles que plats cuisinés ou salades, qui sont susceptibles d'être d'une grande variété, et de constituer une alimentation équilibrée pour le consommateur.

A cet effet, le dispositif qu'elle concerne comprend un dispositif pour la fabrication de sandwichs, du type comprenant un élément tubulaire apte à contenir une garniture alimentaire, de diamètre inférieur au diamètre des morceaux de pain à garnir et de longueur au moins égale à celle des morceaux de pain, l'élément tubulaire étant destiné à être fermé, à son extrémité avant, par un obturateur et, à son extrémité arrière, par un élément en forme de piston associé à des moyens d'action destinés à immobiliser l'élément en forme de piston en translation relatif au pain, des moyens étant prévus pour permettre l'engagement du dispositif dans un morceau de pain caractérisé en ce que l'extrémité avant de l'élément tubulaire est profilée de manière à permettre cet engagement du dispositif dans un morceau de pain à garnir, et en ce que l'obturateur est réalisé de façon à permettre à la partie ou extrémité avant de l'élément tubulaire d'être ouverte juste avant ou durant la fabrication d'un sandwich, sans empêcher l'action de la partie profilée lors de l'engagement du dispositif dans le pain, cet obturateur étant constitué:

a) soit d'une partie fixe de l'élément tubulaire, formant dans ce cas une partie de la formé profilée de son avant, susceptible de s'ouvrir par évasement sous l'action du retrait effectué dudit élément tubulaire et de la poussée, qui en résulte, de son contenu sur la partie avant de cet élément,

b) soit d'un bouchon ou capuchon distinct de l'élément tubulaire, mais apte à être disposé sur sa partie avant pour la fermer, ce bouchon étant retiré juste avant l'engagement du tube dans le morceau de pain,

c) soit d'un moyen de fermeture, partie intégrante de l'extrémité avant de l'élément tubulaire et distincte de sa partie profilée, ce moyen de fermeture étant apte à être retiré ou détruit par une action mécanique ou thermique.

En pratique, l'élément tubulaire est rempli de la garniture souhaitée. Avant la réalisation d'un sandwich, si cette garniture doit être consommée chaude, l'élément tubulaire et son contenu sont réchauffés. L'élément tubulaire tenu par son extrémité postérieure, c'est-à-dire celle située en arrière du piston, est introduit à l'intérieur d'un morceau de pain.

Au cours de ce mouvement, il se produit un fluage de la mie vers l'extérieur avec ménagement d'une cavité centrale. Un appui est alors exercé sur la face arrière du piston pour maintenir celui-ci axialement à l'intérieur du pain, tandis qu'il est procédé au retrait de l'élément tubulaire hors de celui-ci.

Au fur et à mesure de ce mouvement, la garniture contenue à l'intérieur de l'élément tubulaire est éjectée à l'intérieur du pain sous l'effet du retrait de l'élément tubulaire.

L'élément tubulaire est rigide, ou semi-rigide, en matière synthétique, carton ou métal, de section ronde, carrée, rectangulaire ou autre, de forme cylindrique, conique ou pyramidale.

La partie arrière ne contenant pas la garniture, est destinée à la préhension de l'élément tubulaire ou à la fixation de celui-ci sur un support dans le cadre d'une automatisation.

Selon une première forme d'exécution, l'obturateur, situé à l'extrémité avant de l'élément tubulaire, est constitué par un bouchon disposé à l'extérieur de celui-ci, fixé par coincement, par encliquetage ou déchirable ou susceptible d'être coupé aisément soit mécaniquement, soit thermiquement. Ce bouchon, mis en place préalablement au remplissage de l'élément tubulaire est ôté avant engagement de ce dernier dans le pain.

Selon une autre forme d'exécution, l'extrémité avant de l'élément tubulaire est fermée par un bouchon qui, réalisé en une matière alimentaire comestible, est situé à l'intérieur de l'élément tubulaire et est introduit dans celui-ci avant remplissage par la garniture alimentaire.

Dans ce dernier cas, l'obturateur peut être constitué par un morceau de pain ou de légume, ou encore par une pellicule alimentaire telle que la peau utilisée pour la fabrication de saucisses.

Le piston arrière peut, pour sa part, soit être réalisé en un métériau alimentaire, soit être réalisé en un matériau non comestible auquel cas il convient qu'il ne soit pas éjecté à l'intérieur du pain.

Avantageusement, dans ce dernier cas, le piston comporte au moins une ouverture traversante, permettant l'échappement d'air lors de sa mise en place à l'intérieur de l'élément tubulaire après chargement de la garniture.

Conformément à une autre caractéristique de l'invention, l'extrémité avant du tube comporte un rétreint de forme générale conique. Cette structure facilite le fluage et le tassement de la mie lors de l'introduction de l'élément tubulaire dans le morceau de pain, retient l'obturateur en période de stockage dans la mesure où celui-ci est situé à l'intérieur de l'élément tubulaire et constitue une butée pour le piston arrière en fin de déplacement de celui-ci, ce qui est important lorsque le piston est réalisé en un matériau non comestible.

Selon une autre caractéristique, l'extrémité postérieure de l'élément tubulaire possède une entrée de forme conique, qui facilite l'introduction de la garniture et constitue une butée pour la préhension et/ou la fixation de l'élément tubulaire.

Conformément à une possibilité, l'élément tubulaire comporte des perforations, permettant le maintien de la pression à une valeur acceptable, à l'intérieur de l'élément, à la suite de l'élévation de température réalisée lors du réchauffage de la garniture alimentaire, qui se traduirait par le déplacement du piston, qui n'est pas tenu de façon ferme, si l'élément tubulaire était parfaitement étanche.

Avantageusement, les perforations que comporte l'élément tubulaire sont ménagées dans la zone du piston et/ou de l'obturateur avant. Ceci permet un conditionnement sous vide de la garniture, puis lors du chauffage et de la montée en pression à l'intérieur de l'élément tubulaire, un léger déplacement du piston et/ou de l'obturateur découvrant les perforations et laissant ainsi échapper la pression.

Avantageusement, ce dispositif comprend un cadre de forme rectangulaire sur l'une des branches duquel est articulée, autour d'un axe longitudinal à cette branche, une tige s'étendant parallèlement aux deux branches adjacentes du cadre, de longueur au moins égale à celle de ses deux autres branches, la branche du cadre opposée à celle comportant l'articulation de la tige présentant un décrochement de section permettant le passage de l'élément tubulaire contenant la garniture.

Après mise en place de l'élément tubulaire dans un morceau de pain, l'élément tubulaire est engagé, par son extrémité postérieure, sur la tige jusqu'à ce que celle-ci prenne appui sur le piston.

Il est alors procédé à un pivotement de la tige jusqu'à ce que l'extrémité du pain par laquelle se fait l'introduction de l'élément tubulaire, soit en appui contre la branche du cadre présentant un décrochement, l'élément tubulaire étant lui-même engagé dans ce décrochement.

Il est alors procédé au coulissement de l'élément tubulaire le long de la tige dans un sens de retrait hors du pain. Au cours de ce mouvement, le pain est bloqué axialement par appui contre le cadre et le piston est bloqué axialement par appui contre la tige, ce qui se traduit par le transfert de la garniture de l'élément tubulaire à l'intérieur du pain.

Selon une autre forme d'exécution de ce dispositif, l'extrémité avant de l'élément tubulaire est de forme générale conique ou pyramidale et présente des fentes permettant son évasement sous l'effet de la pression du produit lors du transfert de celui-ci de l'élément tubulaire dans le pain.

Cette disposition facilite la pénétration de l'élément tubulaire à l'intérieur du pain avec ménagement d'une cavité bien dégagée, notamment lorsqu'il s'agit de pain de mie, tout en assurant une bonne section de passage du produit lors du transfert de celui-ci dans le pain, la conicité de l'extrémité avant étant choisie pour procurer un bon fluage de la mie de pain.

Selon la forme des fentes, l'extrémité avant peut s'ouvrir à la façon d'une tulipe ou d'un diaphragme.

Selon une autre caractéristique de l'invention, l'extrémité postérieure de l'élément tubulaire, c'est-à-dire l'extrémité opposée à celle d'introduction dans le pain, présente des moyens de préhension constitués par une zone de section élargie comportant une partie en forme générale d'anneau. Cette disposition permet à l'utilisateur d'assurer une bonne tenue de l'arrière de l'élément tubulaire lors du transfert du produit dans le pain, sans se salir les doigts, dans la mesure où la partie postérieure de l'élément serait rendue grasse par les exsudats.

Avantageusement, l'élément tubulaire est recouvert, sur au moins toute sa zone destinée à pénétrer dans le pain, par une gaine en matière synthétique dont l'extrémité, située du côté de l'extrémité avant de l'élément tubulaire, est fermée, cette gaine étant fixée de façon amovible.

Selon une forme préférée d'exécution, la gaine est réalisée en une matière souple et son extrémité fermée épouse l'extrémité avant de l'élément tubulaire.

Cette gaine forme une enveloppe étanche qui assure l'hygiène du produit au cours des différentes manipulations et la rétention des exsudats lors des manipulations et du chauffage de l'ensemble, permettant notamment la mise en température de l'élément tubulaire et du produit qu'il contient en le plongeant dans un bain-marie.

De plus, la gaine assure le maintien en position fermée de l'extrémité avant conique de l'élément tubulaire, ce qui évite tout échappement de produit vers l'extérieur lors du remplissage de l'élément tubulaire.

Selon une forme d'exécution de ce dispositif, l'élément tubulaire présente une fente longitudinale s'étendant sur toute sa longueur et le piston porte un doigt qui en fait saillie radialement, qui traverse la fente de l'élément tubulaire et dont l'extrémité libre est équipée d'une pièce formant poussoir.

En pratique, pour la réalisation d'un sandwich, l'élément tubulaire est introduit dans un morceau de pain jusqu'à ce que le poussoir vienne en appui contre l'extrémité postérieure de celui-ci. Le pouce de la main tenant le pain prend appui sur le poussoir et le bloque en translation, tandis que l'autre main exerce une traction sur l'extrémité arrière de l'élément tubulaire.

Il en résulte un déplacement relatif de l'élément tubulaire et du piston qui est rendu possible grâce à la fente ménagée dans l'élément tubulaire qui joue le rôle de glissière pour le doigt faisant saillie du piston.

Avantageusement, la gaine est fixée par points sur l'élément tubulaire à proximité de son extrémité ouverte. Cet agencement assure l'échappement des gaz générés par le produit lors du réchauffage de celui-ci, ces gaz s'échappent tout d'abord par la fente ménagée entre l'élément tubulaire et la gaine, entre les points de collage.

Selon le type de garniture, et selon les conditions de réchauffage de l'élément tubulaire, il est possible d'envisager une fixation discontinue ou non de la gaine sur l'élément tubulaire, par serrage, coincement, soudage ou collage, l'essentiel étant de permettre une désolidarisation de ces éléments par traction, coupure ou déchirure de la gaine.

En outre, l'élément tubulaire comporte une nervure longitudinale faisant saillie vers l'extérieur, dans laquelle débouche la fente. Cette nervure évite un placage intime de la gaine sur l'élément tubulaire et crée des canaux longitudinaux entre l'élément tubulaire et la gaine par lesquels peuvent s'échapper les gaz de cuisson.

Avantageusement, la fente présente, par points, des zones rétrécies. Ces zones rétrécies forment des butées empêchant, sous l'action de la pression de la gaine, une fermeture de la fente, et assurant le ménagement d'espaces pour l'échappement des gaz.

Selon une autre forme d'exécution de ce dispositif, sur la face avant du piston obturant l'extrémité postérieure de l'élément tubulaire est fixé un fil ou un autre élément de traction similaire, s'étendant sur toute la longueur de l'élément tubulaire et dépassant de l'extrémité avant de celui-ci.

En pratique, dans un tel cas, il est procédé à l'enfoncement de l'élément tubulaire dans le pain, jusqu'à ce que l'extrémité avant de l'élément tubulaire fasse saillie du pain, ce qui permet à l'utilisateur de saisir l'extrémité de l'élément de traction et de bloquer le piston lors du retrait de l'élément tubulaire hors du pain.

De toute façon, l'invention sera bien comprise à l'aide de la description qui suit en référence au dessin schématique annexé représentant, à titre d'exemples non limitatifs, plusieurs formes d'exécution de ce dispositif pour la fabrication de sandwichs :

Figures 1 à 3 sont trois vues en coupe longitudinale d'un premier dispositif et d'un morceau de pain au cours de trois phases de la réalisation d'un sandwich ;

La figure 4 est une vue en coupe longitudinale d'un autre dispositif avant réalisation du sandwich ;

Figure 5 est une vue en coupe longitudinale d'un autre dispositif à usage professionel ;

Figure 6 est une vue en perspective de ce dispositif au cours de la réalisation d'un sandwich ;

Figure 7 est une vue en perspective d'un autre dispositif avant utilisation ;

Figure 8 en est une vue en coupe transversale selon la ligne IX-IX de figure 9 ;

Figure 9 en est une vue en coupe longitudinale et à échelle agrandie ;

Figure 10 en est une vue après introduction dans le pain ;

Figure 11 est une vue en coupe longitudinale d'un autre dispositif après introduction dans un morceau de pain ;

Figures 12 et 13 sont deux vues de côté de l'extrémité avant d'un autre élément tubulaire.

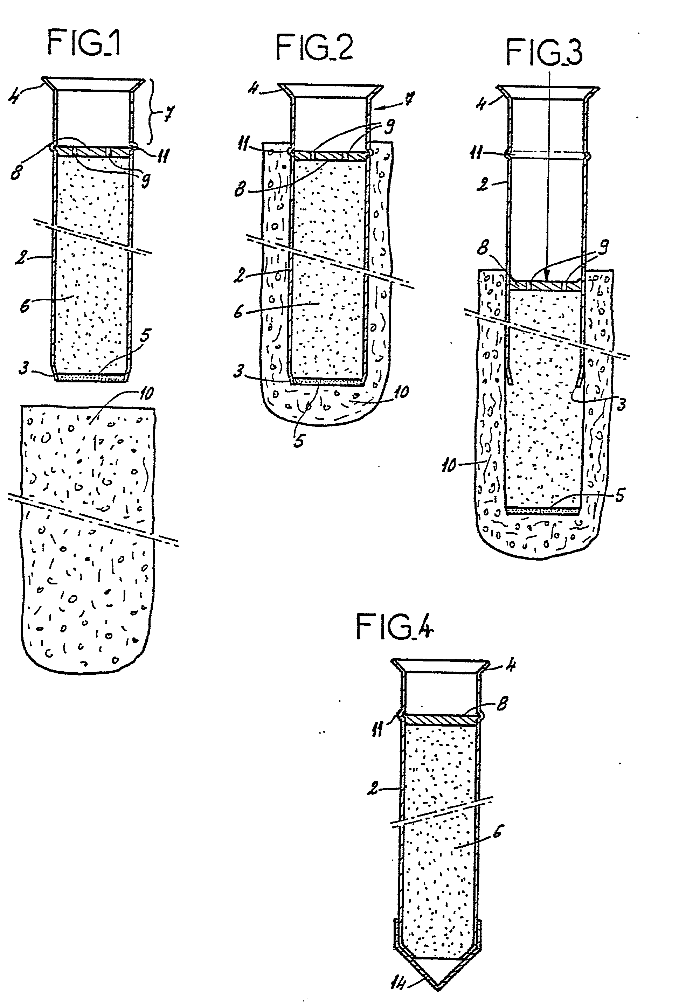

Le dispositif représenté aux figures 1 à 3 comprend un élément tubulaire (2) de forme cylindrique dont une extrémité (3) présente un rétreint conique et dont l'autre extrémité (4) présente une entrée élargie également de forme conique.

Cet élément tubulaire (2) est tout d'abord destiné à recevoir un obturateur (5) réalisé en un produit comestible qui est introduit par l'entrée (4) et vient prendre appui contre le rétreint (3). L'élément tubulaire est alors rempli d'une garniture alimentaire (6) pouvant être constituée par tout type de plats cuisinés dont les morceaux sont suffisamment petits pour pénétrer dans le tube, qu'il s'agisse de plats destinés à être consommés chauds ou de plats destinés à être consommés froids tels que des salades.

Après que l'élément tubulaire ait été rempli sur une partie de sa longueur avec ménagement d'une zone vide (7) du côté de son extrémité (4), il est procédé à la mise en place par cette extrémité, d'un élément (8) en forme de piston comprenant des ouvertures (9) permettant l'échappement d'air lors de son introduction dans le tube.

En pratique, pour réaliser un sandwich, l'élément tubulaire, après avoir été éventuellement réchauffé, est introduit dans un morceau de pain (10). Au cours de cette introduction, la mie flue vers l'extérieur avec ménagement d'une cavité centrale. Au cours de cette opération, l'élément tubulaire est tenu par son extrémité vide (7). Après introduction de l'élément tubulaire dans le pain, il est procédé, à partir de la position représentée à la figure 2, au retrait de l'élément tubulaire hors du pain, avec maintien du piston (8) dans la position dans laquelle il se trouve, comme cela est représenté à la figure 3.

Au fur et à mesure de ce mouvement, la garniture est éjectée à l'intérieur du pain sous l'effet de la pression exercée sur elle par le piston.

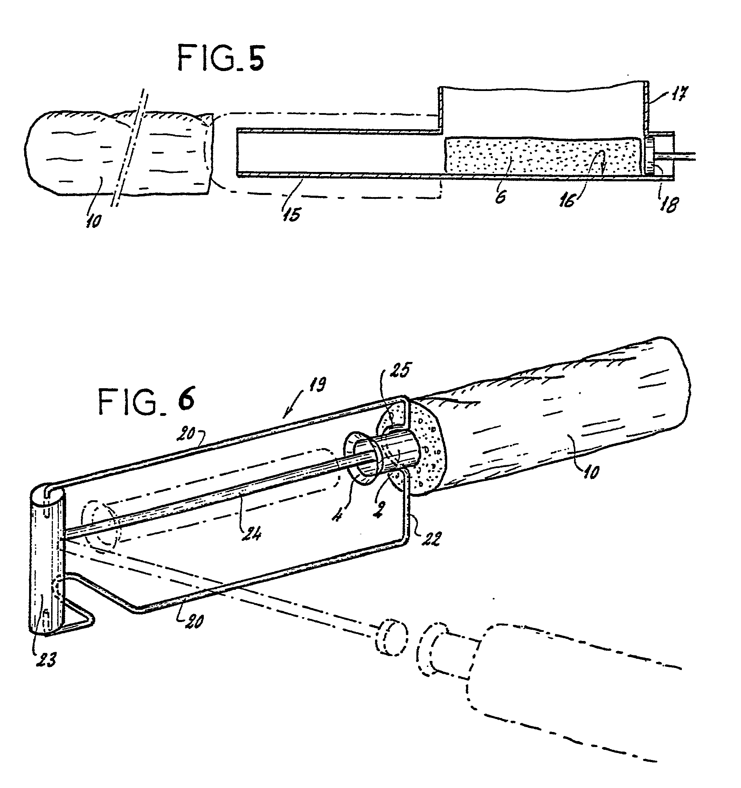

La figure 4 représente un dispositif similaire à celui de la figure 1 dans lequel les mêmes éléments sont désignés par les mêmes références que précédemment. La seule différence réside dans le fait que l'extrémité avant de l'élément tubulaire (2) est obturée par un bouchon (14) rapporté à l'extérieur et fixé par coincement, qui est retiré avant engagement de l'élément tubulaire à l'intérieur du morceau de pain.

La figure 5 représente une variante d'exécution de ce dispositif, particulièrement intéressante dans le cas d'un usage professionnel. Dans ce cas, l'élément tubulaire (15) est fixe, et prolongé à l'arrière par une chambre (16) alimenté en garniture par une goulotte (17). Le fonctionnement demeure le même que précédemment, le transfert de la garniture à l'intérieur du morceau de pain (10) se faisant à l'aide d'un piston (18) déplaçable axialement.

La figure 6 représente une forme de réalisation de ce dispositif particulièrement intéressante pour réaliser le retrait de l'élément tubulaire hors du pain.

A cet effet, il est prévu un cadre (19) de forme rectangulaire, constitué par un étrier possédant deux branches parallèles (20) reliées l'une à l'autre par une branche centrale (22). Sur les extrémités libres des branches (20) est montée pivotante une pièce (23) qui, parallèle à la branche (22), porte une tige (24) de longueur au moins égale à la longueur des branches (20). En outre, la branche centrale (22) de l'étrier présente un décrochement (25) permettant le passage de l'élément tubulaire (2).

En pratique, lorsque l'élément tubulaire a été introduit dans le morceau de pain, et se trouve dans la position représentée à la figure 2, l'élément tubulaire est engagé par son extrémité arrière sur la tige (24) qui se trouve dans la position représentée en traits mixtes au dessin, jusqu'à ce que l'extrémité libre de celle-ci vienne en appui contre le piston (8).

Il est alors procédé au pivotement de la tige (24) pour amener celle-ci dans la position représentée en traits pleins à la figure 6. L'extrémité du pain, par laquelle l'élément tubulaire a été engagé, prend alors appui contre la branche centrale (22) du cadre (19), tandis que l'élément tubulaire (2) traverse celle-ci par le décrochement (25). Le morceau de pain et le piston étant bloqués axialement, il est procédé au retrait de l'élément tubulaire (2) hors du pain, par coulissement le long de la tige (24). Au cours de ce mouvement, est réalisé le transfert de la garniture de l'élément tubulaire à l'intérieur du pain de la façon indiquée précédemment.

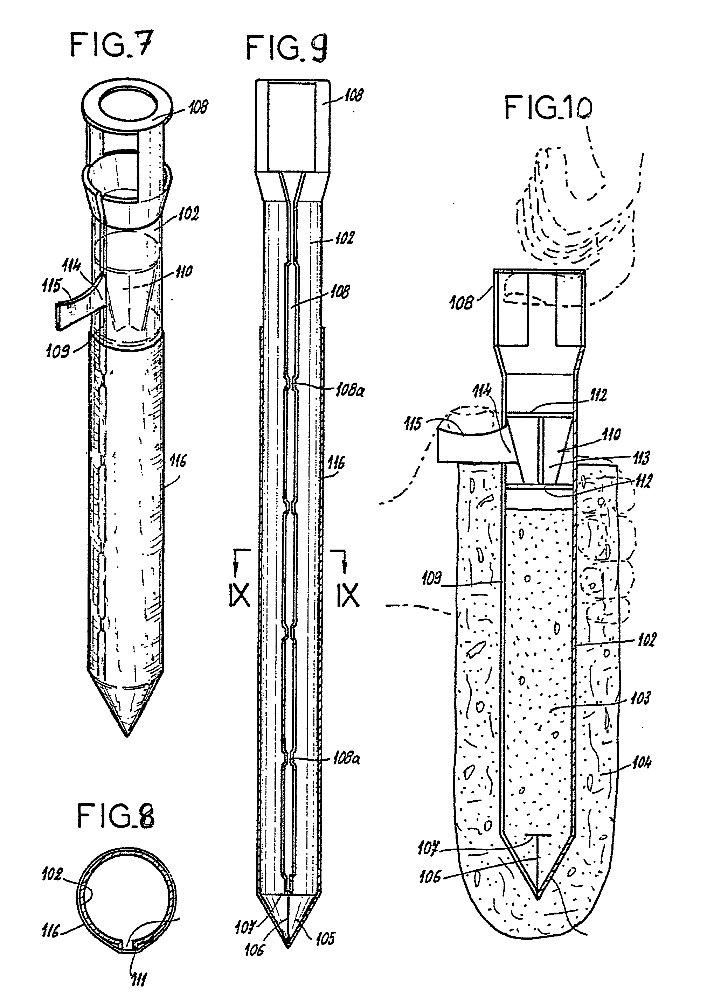

Le dispositif représenté aux figures 7 à 10 comprend un élément tubulaire (102) destiné à contenir un produit alimentaire (103) formant garniture d'un morceau de pain (104). L'extrémité avant (105) de cet élément tubulaire possède une forme générale conique et comporte des fentes (106) et (107) longitudinales et transversales permettant, en conditions normales, le maintien sous forme conique de l'extrémité avant, mais l'ouverture de celle-ci sous l'effet de la pression exercée sur le produit (103) contenu à l'intérieur de l'élément (102).

Comme montré au dessin, l'extrémité postérieure de l'élément tubulaire (102) est élargie et comporte une partie (108) en forme d'anneau. En outre, l'élément tubulaire présente une fente longitudinale (109) s'étendant sur toute sa longueur, débouchant dans une nervure (111) faisant saillie vers l'extérieur.

Comme montré à la figure 9, la fente (109) n'est pas de largeur constante, mais présente un certain nombre de zones rétrécies (109a) qui, lorsque leurs bords sont en butée, évitent la fermeture de la fente dans les zones plus larges. L'extrémité postérieure de cet élément tubulaire est obturée par un piston (110) constitué par deux disques parallèles (112) réunis par une entretoise (113) de laquelle fait saillie radialement un doigt (114), traversant la fente (109), et dont l'extrémité libre est équipée d'une partir (115) en forme de poussoir.

En outre, l'élément tubulaire est enveloppe, jusqu'au niveau du poussoir (115) du piston (110), par une gaine (116) en matière synthétique souple dont l'extrémité, située du côté de l'extrémité avant de l'élément tubulaire, est fermée et épouse ladite extrémité et dont l'extrémité postérieure ouverte est fixée par points, par exemple par collage, sur l'élément tubulaire.

En pratique, le produit (103) est conditionné à l'intérieur de l'élément tubulaire après mise en place de la gaine (116), celle-ci demeurant en place au cours des différentes opérations de manipulation et de réchauffage et n'étant retirée de l'élément tubulaire que juste avant l'introduction de celui-ci dans le pain.

Comme montré à la figure 10, l'élément tubulaire est introduit dans le pain jusqu'à ce que le poussoir (115) vienne en appui contre l'extrémité postérieure du pain. L'utilisateur prend alors appui à l'aide d'un doigt, tel que le pouce de la main tenant le pain, sur le poussoir, et exerce, à l'aide de l'autre main un mouvement de traction sur l'anneau (108), ce qui permet le retrait de l'élément tubulaire hors du pain et le transfert du produit alimentaire à l'intérieur de ce dernier.

Dans la mesure où la gaine est destinée à recouvrir l'élément tubulaire sur la totalité de sa longueur, le poussoir est souple ou monté de façon escamotable, afin de ne pas gêner la mise en place de la gaine.

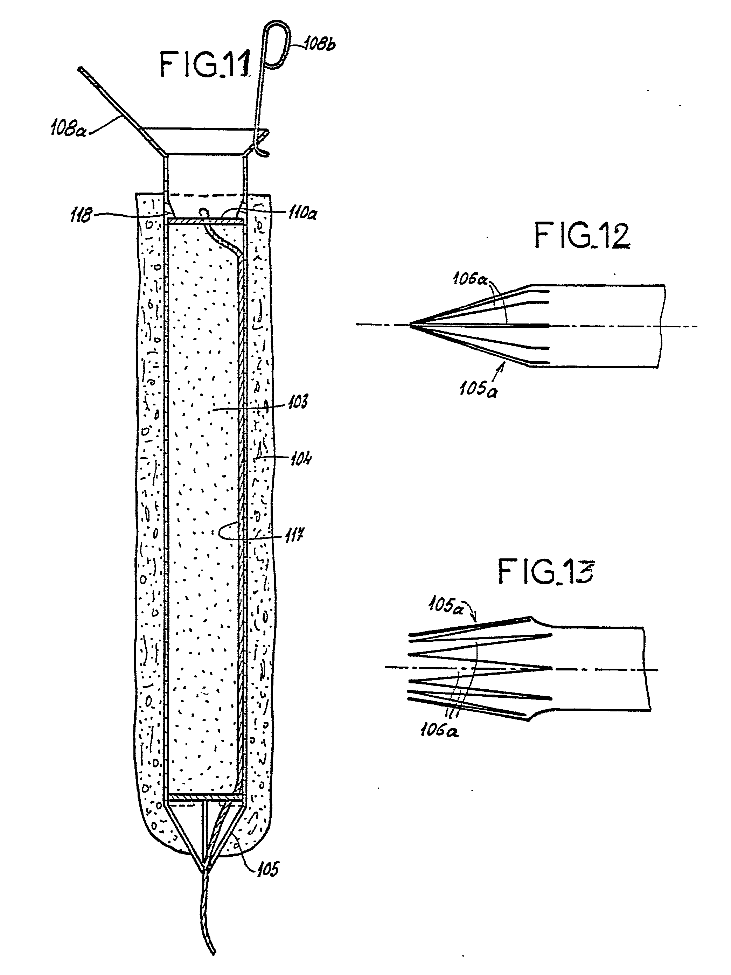

La figure 11 représente une variante d'exécution de ce dispositif dans laquelle l'élément tubulaire n'est pas fendu, et dans laquelle, sur la face avant du piston (110a), est fixé un élément de traction tel qu'un fil (117) traversant l'élément tubulaire sur toute sa longueur et débordant de l'extrémité avant (105) de celui-ci. Le piston (110a) est bloqué par encliquetage, par passage derrière une nervure (118) faisant saillie sur la face interne de l'élément tubulaire à proximité de l'extrémité postérieure de celui-ci.

Dans la forme d'exécution représentée à la figure 11, l'anneau (108) n'occupe plus une position axiale, mais une position latérale, étant constitué par une languette fixe (108a), comme montré à la partie gauche du dessin ou par une languette amovible (108b), comme montré à la partie droite du dessin. Dans un tel cas, l'élément tubulaire est introduit dans un morceau de pain (104) jusqu'à ce que son extrémité avant dépasse du morceau de pain. L'utilisateur bloque alors le fil (117) et, par suite, le piston (110a) avant de procéder au retrait de l'élément tubulaire (102) par traction sur l'anneau (108a).

Les figures 12 et 13 représentent une variante de l'extrémité avant (105a) de l'élément tubulaire, dans laquelle celui-ci ne comporte que des fentes longitudinales (106a).

Comme il ressort de ce qui précède, l'invention apporte une grande amélioration à la technique existante en fournissant un dispositif de conception simple, permettant une réalisation très facile et très hygiénique de sandwichs à l'aide de produits alimentaires très variés qui peuvent être introduits dans un morceau de pain, froids ou après réchauffage.

**Revendications**

1. Dispositif pour la fabrication de sandwichs, du type comprenant un élément tubulaire (2) apte à contenir une garniture alimentaire (6) de diamètre inférieur au diamètre des morceaux de pain (10) à garnir et de longueur au moins égale à celle des morceaux de pain, l'élément tubulaire étant destiné à être fermé, à son extrémité avant, par un obturateur et, à son extrémité arrière, par un élément en forme de piston associé à des moyens d'action destinés à immobiliser l'élément en forme de piston en translation relatif au pain, des moyens étant prévus pour permettre l'engagement du dispositif dans un morceau de pain caractérisé en ce que l'extrémité avant (3; 105) de l'élément tubulaire (2; 12; 15; 102) est profilée de manière à permettre cet engagement du dispositif dans un morceau de pain à garnir (10), et en ce que l'obturateur est réalisé de façon à permettre à la partie ou extrémité avant de l'élément tubulaire d'être ouverte juste avant ou durant la fabrication d'un sandwich, sans empêcher l'action de la partie profilée lors de l'engagement du dispositif dans le pain, cet obturateur étant constitué

    a) soit d'une partie fixe (105) de l'élément tubulaire, formant dans ce cas une partie de la formé profilée de son avant, susceptible de s'ouvrir par évasement sous l'action du retrait effectué dudit élément tubulaire et de la poussée, qui en résulte, de son contenu sur la partie avant de cet élément,

    b) soit d'un bouchon ou capuchon (14) distinct de l'élément tubulaire, mais apte à être disposé sur sa partie avant pour la fermer, ce bouchon étant retiré juste avant l'engagement du tube dans le morceau de pain,

    c) soit d'un moyen de fermeture, partie intégrante de l'extrémité avant de l'élément tubulaire et distincte de sa partie profilée, ce moyen de fermeture étant apte à être retiré ou détruit par une action mécanique ou thermique.

2. Dispositif pour la fabrication de sandwichs, du type comprenant un élément tubulaire (2) apte à contenir une garniture alimentaire (6), de diamètre inférieur au diamètre des morceaux de pain (10) à garnir et de longueur au moins égale à celle des morceaux de pain, l'élément tubulaire étant destiné à être fermé, à son extrémité avant, par un obturateur et, à son extrémité arrière, par un élément en forme de piston associé à des moyens d'action destinés à immobiliser l'élément en forme de piston en translation relatif au pain, des moyens étant prévus pour permettre l'engagement du dispositif dans un morceau de pain, caractérisé en ce que l'extrémité avant (3; 105) de l'élément tubulaire (2; 12; 15; 102) est profilée de manière à permettre cet engagement du dispositif dans un morceau de pain à garnir, l'élément tubulaire étant rempli d'une matière alimentaire destinée à garnir le pain, et en ce que l'obturateur (5) est constitué d'un bouchon de matière alimentaire, apte à être évacué de l'élément tubulaire avec la garniture alimentaire lors de la phase de garnissage du pain.

3. Dispositif selon la revendication 1, caractérisé en ce que l'obturateur (14), situé à l'extrémité avant de l'élément tubulaire (2), est constitué par un bouchon disposé à l'extérieur de celui-ci, fixé par coincement ou encliquetage.

4. Dispositif selon la revendication 1, caractérisé en ce que l'extrémité avant de l'élément tubulaire (2) est fermée par un bouchon (5) qui, réalisé en une matière alimentaire comestible, est situé à l'intérieur de l'élément tubulaire et est introduit dans celui-ci avant remplissage par la garniture alimentaire.

5. Dispositif selon l'une quelconque des revendications 1 à 4, caractérisé en ce que le piston (8) comporte au moins une ouverture traversante (9), permettant l'échappement d'air lors de sa mise en place à l'intérieur de l'élément tubulaire après chargement de la garniture.

6. Dispositif selon l'une quelconque des revendications 1 à 5, caractérisé en ce que l'extrémité avant du tube (2) comporte un rétreint (3) de forme générale conique.

7. Dispositif selon l'une quelconque des revendications 1 à 6, caractérisé en ce que l'extrémité postérieure (4) de l'élément tubulaire (2) possède une entrée de forme conique, qui facilite l'introduction de la garniture et constitue une butée pour la préhension et/ou la fixation de l'élément tubulaire.

8. Dispositif selon l'une quelconque des revendications 1 à 7, caractérisé en ce que l'élément tubulaire comporte des perforations, permettant le maintien de la pression à une valeur acceptable, à l'intérieur de l'élément, à la suite de l'élévation de température réalisée lors du réchauffage de la garniture alimentaire.

9. Dispositif selon la revendication 8, caractérisé en ce que les perforations que comporte l'élément tubulaire sont ménagées dans la zone du piston et/ou de l'obturateur avant.

10. Dispositif selon l'une quelconque des revendications 1 à 9, caractérisé en ce qu'il comprend un cadre (19) de forme rectangulaire sur l'une des branches (23) duquel est articulée, autour d'un axe longitudinal à cette branche, une tige (24) s'étendant parallèlement aux deux branches adjacentes (20) du cadre, de longueur au moins égale à celle de ces deux autres branches, la branche (22) du cadre opposée à celle comportant l'articulation de la tige présentant un décrochement (25) de section permettant le passage de l'élément tubulaire contenant la garniture.

11. Dispositif selon la revendication 1, caractérisé en ce que l'extrémité avant (105) de l'élément tubulaire (102) est de forme générale conique ou pyramidale et présente des fentes (106, 107) permettant son évasement sous l'effet de la pression du produit lors du transfert de celui-ci de l'élément tubulaire dans le pain.

12. Dispositif selon la revendication 11, caractérisé en ce que l'extrémité postérieure de l'élément tubulaire (102), c'est-à-dire l'extrémité opposée à celle d'introduction dans le pain, présente des moyens de préhension constitués par une zone de section élargie comportant une partie (108) en forme générale d'anneau, ou de languette fixe ou amovible.

13. Dispositif selon l'une quelconque des revendications 11 et 12, caractérisé en ce que l'élément tubulaire (102) est recouvert, sur au moins toute sa zone destinée à pénétrer dans le pain, par une gaine en matière synthétique (116) dont l'extrémité, située du côté de l'extrémité avant (105) de l'élément tubulaire, est fermée, cette gaine étant fixée de façon amovible.

14. Dispositif selon la revendication 13, caractérisé en ce que l'extrémité fermée de la gaine (116) épouse l'extrémité avant (105) de l'élément tubulaire.

15. Dispositif selon l'une quelconque des revendications 11 à 14, caractérisé en ce que l'élément tubulaire (102) présente une fente longitudinale (109) s'étendant sur toute sa longueur et le piston (110) porte un doigt (114) qui en fait saillie radialement, qui traverse la fente (109) de l'élément tubulaire et dont l'extrémité libre est équipée d'une pièce (115) formant poussoir.

16. Dispositif selon l'ensemble des revendications 13 à 15, caractérisé en ce que la gaine (116) est fixée par points sur l'élément tubulaire à proximité de son extrémité ouverte.

17. Dispositif selon l'une quelconque des revendications 15 et 16, caractérisé en ce que l'élément tubulaire (102) comporte une nervure longitudinale (110) faisant saillie vers l'extérieur, dans laquelle débouche la fente (109).

18. Dispositif selon l'une quelconque des revendications 15 à 17, caractérisé en ce que la fente (109) présente, par points, des zones rétrécies (109a).

19. Dispositif selon l'une quelconque des revendications 11 à 18, caractérisé en ce que l'élément tubulaire (102) présente, à proximité de son extrémité postérieure, des moyens de maintien par encliquetage du piston (110), constitués par une nervure (118) ou une gorge ménagée dans sa face interne.

20. Dispositif selon la revendication 11, caractérisé en ce que, sur la face avant du piston (110a) obturant l'extrémité postérieure de l'élément tubulaire (102) est fixé un fil (117) ou autre élément de traction similaire, s'étendant sur toute la longueur de l'élément tubulaire de dépassant de l'extrémité avant de celui-ci.

**Claims**

1. Apparatus for making sandwiches, of the type comprising a tubular element (2) capable of containing a food filling (6), of a diameter smaller than the diameter of the pieces of bread (10) to be filled and of a length at least equal to that of the pieces of bread, the tubular element being intended to be closed, at its front end, by an obturator and, at its rear end, by an element in the form of a piston attached to actuating means intended to immobilize the element in the form of a piston in translation relative to the bread, means being provided to enable insertion of the apparatus into a piece of bread, characterized in that the front end (3; 105) of the tubular element (2; 12; 15; 102) is shaped so as to enable this insertion of the apparatus into a piece of bread to be filled (10), and in that the obturator is constructed so as to enable the front part or end of the tubular element to be opened just before or during the making of a sandwich, without preventing the action of the shaped part during insertion of the apparatus into the bread, this obturator consisting:

a) either of a fixed part (105) of the tubular element, forming in this case a part of the shaped form of its front, capable of opening by widening out under the action of withdrawal of the said tubular element and of the pressure, which results therefrom, of its content on the front part of this element,

b) or of a plug or cap (14) separate from the tubular element, but capable of being arranged on its front part in order to close it, this plug being withdrawn just before insertion of the tube into the piece of bread,

c) or of a closing means, an integral part of the front end of the tubular element and separate from its shaped part, this closing means being capable of being withdrawn or destroyed by a mechanical action or the action of heat.

2. Apparatus for making sandwiches, of the type comprising a tubular element (2) capable of containing a food filling (6), of a diameter smaller than the diameter of the pieces of bread (10) to be filled and of a length at least equal to that of the pieces of bread, the tubular element being intended to be closed, at its front end, by an obturator and, at its rear end, by an element in the form of a piston attached to actuating means intended to immobilize the element in the form of a piston in translation relative to the bread, means being provided to enable insertion of the apparatus into a piece of bread, characterized in that the front end (3; 105) of the tubular element (2; 12; 15; 102) is shaped so as to enable this insertion of the apparatus into a piece of bread to be filled, the tubular element being filled with a food material intended to fill the bread and in that the obturator (5) consists of a plug of food material, capable of being discharged from the tubular element with the food filling when the bread is filled.

3. Apparatus according to Claim 1, characterized in that the obturator (14), located at the front end of the tubular element (2), consists of a plug arranged outside the latter, secured by jamming or a ratchet mechanism.

4. Apparatus according to Claim 1, characterized in that the front end of the tubular element (2) is closed by a plug (5) which, made of an edible food material, is located inside the tubular element and is introduced into the latter before filling with the food filling.

5. Apparatus according to any one of Claims 1 to 4, characterized in that the piston (8) comprises at least one transverse opening (9), allowing air to escape during its positioning inside the tubular element after charging with the filling.

6. Apparatus according to any one of Claims 1 to 5, characterized in that the front end of the tube (2) comprises a hammered-out section (3) of a general conical shape.

7. Apparatus according to any one of Claims 1 to 6, characterized in that the rear end (4) of the tubular element (2) has an inlet of conical shape which facilitates introduction of the filling and forms a stop for gripping and/or securing of the tubular element.

8. Apparatus according to any one of Claims 1 to 7, characterized in that the tubular element has perforations, making it possible to maintain the pressure at an acceptable value inside the element following the rise in temperature created during reheating of the food filling.

9. Apparatus according to Claim 8, characterized in that the perforations of the tubular element are made in the area of the piston and/or of the front obturator.

10. Apparatus according to any one of Claims 1 to 9, characterized in that it comprises a frame (19) of rectangular shape on one of the arms (23) of which is articulated, about an axis longitudinal to this arm, a rod (24) extending parallel to the two adjacent arms (20) of the frame, of a length at least equal to that of these two other arms, the arm (22) of the frame opposite to that comprising the articulation of the rod exhibiting a recess (25) of a cross-section enabling passage of the tubular element containing the filling.

11. Apparatus according to Claim 1, characterized in that the front end (105) of the tubular element (102) is of a general conical or pyramidal shape and exhibits slits (106, 107) allowing it to widen out under the action of the pressure of the product during transfer of the latter from the tubular element into the bread.

12. Apparatus according to Claim 11, characterized in that the rear end of the tubular element (102), that is to say the end opposite that for introduction into the bread, exhibits gripping means consisting of an area of enlarged cross-section comprising a part (108) in the general shape of a ring, or of a fixed or removable tongue.

13. Apparatus according to either of Claims 11 and 12, characterized in that the tubular element (102) is covered, over at least all its area intended to penetrate the bread, by a sheath of synthetic material (116), the end of which, situated on the side of the front end (105) of the tubular element, is closed, this sheath being secured in a removable manner.

14. Apparatus according to Claim 13, characterized in that the closed end of the sheath (116) corresponds in shape to the front end (105) of the tubular element.

15. Apparatus according to any one of Claims 11 to 14, characterized in that the tubular element (102) has a longitudinal slit (109) extending over its entire length and the piston (110) has a finger (114) which projects therefrom radially, which crosses the slit (109) of the tubular element and the free end of which is equipped with a piece (115) forming a pushbutton.

16. Apparatus according to the whole of Claims 13 to 15, characterized in that the sheath (116) is secured by spots on the tubular element in the vicinity of its open end.

17. Apparatus according to either of Claims 15 and 16, characterized in that the tubular element (102) comprises a longitudinal rib (110) projecting outwards, into which the slit (109) opens up.

18. Apparatus according to any one of Claims 15 to 17, characterized in that the slit (109) has, in spots, narrow zones (109a).

19. Apparatus according to any one of Claims 11 to 18, characterized in that the tubular element (102) has, in the vicinity of its rear end, means for maintaining the piston (110) by ratchet mechanism, consisting of a rib (118) or groove formed in its internal face.

20. Apparatus according to Claim 11, characterized in that, on the front face of the piston (110a) closing the rear end of the tubular element (102) is secured a thread (117) or another similar pulling element, extending over the whole length of the tubular element and projecting beyond the front end of the latter.

## Patentansprüche

1. Vorrichtung zur Herstellung von Sandwiches, mit einem Rohrelement (2), das einen Nahrungsmittelbelag (6) aufnehmen kann, dessen Durchmesser geringer ist als der Durchmesser zu belegender Brotstücke (10) und dessen Länge wenigstens gleich der der Brotstücke ist, wobei das Rohrelement an seinem vorderen Ende durch einen Verschluß und an seinem hinteren Ende durch ein kolbenförmiges Element verschlossen wird, das mit einer Betätigungseinrichtung verbunden ist, die das kolbenförmige Element während einer zum Brot relativen Verschiebung festhält, und Einrichtungen vorgesehen sind, um ein Einführen der Vorrichtung in ein Brotstück zu ermöglichen, dadurch gekennzeichnet, daß das vordere Ende (3; 105) des Rohrelementes (2; 12; 15; 102) so profiliert ist, daß es diese Einführung der Vorrichtung in ein zu belegendes Brotstück (10) ermöglicht, und daß der Verschluß in einer Art und Weise gestaltet ist, die es dem vorderen Ende oder Abschnitt des Rohrelements ermöglicht, knapp vor oder während der Herstellung eines Sandwichs offen zu sein, ohne die Wirkung des profilierten Abschnitts bei der Einführung der Vorrichtung in das Brot zu behindern, wobei dieser Verschluß gebildet wird:

a) entweder von einem festen Abschnitt (105) des Rohrelements, der in diesem Fall einen Abschnitt der profilierten Form seines Vorderteils bildet und der sich unter der Wirkung des von dem Rohrelement ausgeführten Rückzugs und des daraus resultierenden Drucks seines Inhalts auf den vorderen Abschnitt dieses Elements durch Erweitern öffnen kann,

b) oder von einem Stopfen oder einer Kappe (14), der bzw. die von dem Rohrelement getrennt ist, aber auf seinem vorderen Abschnitt angeordnet werden kann, um ihn zu schließen, wobei dieser Stopfen knapp vor dem Einführen des Rohres in das Brotstück abgezogen wird,

c) oder von einer Schließeinrichtung, die ein wesentlicher Bestandteil des vorderen Endes des Rohrelements ist und von seinem profilierten Abschnitt getrennt ist, wobei diese Schließeinrichtung durch mechanische oder thermische Wirkung abgezogen oder zerstört werden kann.

2. Vorrichtung zur Herstellung von Sandwiches, mit einem Rohrelement (2), das einen Nahrungsmittelbelag (6) aufnehmen kann, dessen Durchmesser geringer ist als der Durchmesser zu belegender Brotstücke (10) und dessen Länge wenigstens gleich der der Brotstücke ist, wobei das Rohrelement an seinem vorderen Ende durch einen Verschluß und an seinem hinteren Ende durch ein kolbenförmiges Element verschlossen wird, das mit einer Betätigungseinrichtung verbunden ist, die das kolbenförmige Element während einer zum Brot relativen Verschiebung festhält, und Einrichtungen vorgesehen sind, um ein Einführen der Vorrichtung in ein Brotstück zu ermöglichen, dadurch gekennzeichnet, daß das vordere Ende (3; 105) des Rohrelements (2; 12; 15; 102) so profiliert ist, daß es diese Einführung der Vorrichtung in ein zu belegendes Brotstück ermöglicht, wobei das Rohrelement mit einem Nahrungsmittel gefüllt ist, das das Brot belegen soll, und daß der Verschluß (5) von einem Stopfen aus Nahrungsmittel gebildet ist, der im Verlauf des Belegens des Brotes mit dem Nahrungsmittelbelag aus dem Rohrelement abgeführt werden kann.

3. Vorrichtung nach Anspruch 1, dadurch gekennzeichnet, daß der am vorderen Ende des Rohrelements (2) befindliche Verschluß (14) von einem Stopfen gebildet wird, der befestigt durch Verklemmen oder Rastsperrung an dessen Ende angeordnet ist.

4. Vorrichtung nach Anspruch 1, dadurch gekennzeichnet, daß das vordere Ende des Rohrelements (2) durch einen Stopfen (5) geschlossen ist, der hergestellt aus eßbaren Nahrungsmittel im Inneren des Rohrelements angeordnet und vor der Füllung mit dem Nahrungsmittelbelag in dieses eingeführt ist.

5. Vorrichtung nach einem der Ansprüche 1 bis 4, dadurch gekennzeichnet, daß der Kolben (8) wenigstens eine Durchgangsöffnung (9) aufweist, die ein Entweichen von Luft ermöglicht, während er nach Füllung des Belags im Inneren des Rohrelements angeordnet wird.

6. Vorrichtung nach einem der Ansprüche 1 bis 5, dadurch gekennzeichnet, daß das vordere Ende des Rohrs (2) eine insgesamt kegelförmige Verengung (3) aufweist.

7. Vorrichtung nach einem der Ansprüche 1 bis 6, dadurch gekennzeichnet, daß das hintere Ende (4) des Rohrelements (2) einen konischen Einlaß besitzt, der die Einführung des Belags erleichtert und einen Anschlag für das Eingreifen und/oder die Befestigung des Rohrelements bildet.

8. Vorrichtung nach einem der Ansprüche 1 bis 7, dadurch gekennzeichnet, daß das Rohrelement Perforationen aufweist, die nach der bei der Erwärmung des Nahrungsmittelbelags durchgeführten Temperaturerhöhung im Inneren des Elements die Druckerhaltung auf einem zulässigen Wert ermöglicht.

9. Vorrichtung nach Anspruch 8, dadurch gekennzeichnet, daß die Perforationen, die das Rohrelement aufweist, im Bereich des Kolbens und/oder des vorderen Verschlusses angebracht sind.

10. Vorrichtung nach einem der Ansprüche 1 bis 9, dadurch gekennzeichnet, daß sie einen rechteckigen Rahmen (19) aufweist, auf dessen einem Schenkel (23) eine sich parallel zu den zwei angrenzenden Schenkeln (20) des Rahmens erstreckende Stange (24) um eine Längsachse herum schwenkbar an diesem Schenkel angeordnet ist, deren Länge wenigstens gleich der dieser beiden anderen Schenkel ist, wobei der diesem das Gelenk der Stange umfassenden gegenüberliegende Schenkel (22) des Rahmens eine Teilauslenkung (25) aufweist, die den Durchgang des den Belag enthaltenden Rohrelements ermöglicht.

11. Vorrichtung nach Anspruch 1, dadurch gekennzeichnet, daß das vordere Ende (105) des Rohrelements (102) insgesamt kegelförmig oder pyramidenförmig ausgebildet ist und Schlitze (106, 107) aufweist, die seine Erweiterung unter Wirkung des Drucks des Erzeugnisses bei dessen Überführung von dem Rohrelement in das Brot ermöglichen.

12. Vorrichtung nach Anspruch 11, dadurch gekennzeichnet, daß das hintere Ende des Rohrelements (102), d.h. das dem der Einführung in das Brot gegenüberliegende Ende, eine Eingreifeinrichtung, die von einem Bereich mit erweitertem Abschnitt gebildet wird, der einen insgesamt ringförmigen Abschnitt (108) umfaßt oder eine feste oder lösbare Lasche aufweist.

13. Vorrichtung nach einem der Ansprüche 11 und 12, dadurch gekennzeichnet, daß das Rohrelement (102) auf wenigstens seinem gesamten, zum Eindringen in das Brot bestimmten Bereich durch eine Hülse (116) aus synthetischem Material abgedeckt ist, deren sich auf der Seite des vorderen Endes (105) des Rohrelements befindliches Ende geschlossen ist, wobei diese Hülse lösbar befestigt ist.

14. Vorrichtung nach Anspruch 13, dadurch gekennzeichnet, daß das geschlossene Ende der Hülse (116) am vorderen Ende (105) des Rohrelements anliegt.

15. Vorrichtung nach einem der Ansprüche 11 bis 14, dadurch gekennzeichnet, daß das Rohrelement (102) einen Längsschlitz (109) aufweist, der sich über seine ganze Länge erstreckt und daß der Kolben (110) einen Zapfen (114) trägt, der radial vorsteht, der den Schlitz (109) des Rohrelements durchquert und dessen freies Ende mit einem einen Drücker bildenden Stück (115) versehen ist.

16. Vorrichtung nach der Gesamtheit der Ansprüche 13 bis 15, dadurch gekennzeichnet, daß die Hülse (116) stellenweise auf dem Rohrelement in der Nähe seines offenen Endes befestigt ist.

17. Vorrichtung nach einem der Ansprüche 15 und 16, dadurch gekennzeichnet, daß das Rohrelement (102) eine nach außen vorstehende Längsrippe (110) aufweist, in die der Schlitz (109) mündet.

18. Vorrichtung nach einem der Ansprüche 15 bis 17, dadurch gekennzeichnet, daß der Schlitz (109) stellenweise verengte Bereiche (109a) aufweist.

19. Vorrichtung nach einem der Ansprüche 11 bis 18, dadurch gekennzeichnet, daß das Rohrelement (102) in der Nähe seines hinteren Endes eine Halteeinrichtung für ein Einrasten des Kolbens (110) aufweist, die von einer Rippe (118) oder einer in seiner Innenfläche angeordneten Rille gebildet ist.

20. Vorrichtung nach Anspruch 11, dadurch gekennzeichnet, daß auf der Vorderfläche des das hintere Ende des Rohrelements (102) verschließenden Kolbens (110a) ein Draht (117) oder ein anderes ähnliches Zugelement befestigt ist, das sich über die ganze Länge des Rohrelements erstreckt und von dessen vorderem Ende vorsteht.

EP 0 196 983 B1

FIG.1

FIG.2

FIG.3

FIG.4

# FIG. 5

# FIG. 6

EP 0 196 983 B1

FIG.7

FIG.9

FIG.10

FIG.8

EP 0 196 983 B1

FIG.11

108b

108a

118

110a

103

104

117

105

FIG.12

106a

105a

FIG.13

105a

106a